# EUROPÄISCHE PATENTSCHRIFT

(11) **EP 3 315 925 B1**
(45) Veröffentlichungstag und Bekanntmachung des Hinweises auf die Patenterteilung: **19.05.2021**
(21) Anmeldenummer: 17195575.0
(22) Anmeldetag: 10.10.2017
(51) Int. Cl.: G01F 23/284, G01F 23/00, G01F 25/00

(54) **FÜLLSTANDSSCHALTERANORDNUNG UND VERFAHREN ZUM BESTIMMEN DES FÜLLSTANDES EINES MEDIUMS**
FILL LEVEL SWITCH ASSEMBLY AND METHOD FOR DETERMINING THE FILL LEVEL OF A MEDIUM
ENSEMBLE COMMUTATEUR D'UN NIVEAU DE REMPLISSAGE ET PROCÉDÉ DE DÉTERMINATION DU NIVEAU DE REMPLISSAGE D'UN MILIEU

(30) Priorität: 31.10.2016 DE 102016120727
(43) Veröffentlichungstag der Anmeldung: 02.05.2018
(73) Patentinhaber: Krohne Messtechnik GmbH, 47058 Duisburg (DE)
(72) Erfinder: Convent, Thomas, 47661 Issum (DE); Gerding, Michael, 44805 Bochum (DE); Storch, Robert, 58511 Lüdenscheid (DE)
(74) Vertreter: Gesthuysen Patentanwälte

(56) Entgegenhaltungen:
- DE-A1-102013 100 817
- US-A1- 2006 132 351
- US-B1- 8 933 789

## Beschreibung

Die Erfindung betrifft eine Füllstandsschalteranordnung zur Bestimmung des Füllstandes eines Mediums in einem Behältnis. Des Weiteren betrifft die Erfindung ein Verfahren zur Bestimmung des Füllstandes eines Mediums.

Füllstandsschalter werden in der Regel dafür eingesetzt, obere oder untere Alarmschwellen in Tanks oder Silos zu realisieren. Die Füllstandsschalter werden dabei entweder in horizontaler Ausrichtung seitlich durch die Tankwand montiert oder in vertikaler Ausrichtung entweder durch den Tankdeckel oder den Tankboden montiert. Aus dem Stand der Technik sind verschiedene technische Realisierungen bekannt, um ein Medium auf der Höhe des Füllstandsschalters zu erkennen, wie zum Beispiel Schwinggabelschalter oder Schalter mit kapazitiver Detektion. Diese Schalter haben gemein, dass die jeweiligen Schalter die Berührung - und damit das Überschreiten der Schaltschwelle - eigenständig detektieren und in entsprechende Schaltsignale umsetzen; beispielsweise wird ein Schaltausgang des Füllstandsschalters geöffnet oder geschlossen, es können aber auch aktiv Signale über den Schaltausgang ausgegeben werden.

Die DE 10 2013 100817 A1 zeigt eine Füllstandschalteranordnung mit einem Sendeelement und einem Empfängerelement, die zusammen im Wirkzusammenhang stehen. Das Sendeelement sendet ein Mikrowellensignal aus, das durch in dem Signalpfad befindliches Medium geschwächt, also verändert wird

Auch aus der US 2006/0132351 A1 ist eine Füllstandschalteranordnung bekannt. Die Füllstandschalteranordnung weist eine Mehrzahl von Sendeelementen und ein Empfängerelement auf. So können verschiedene Füllstände detektiert werden. Um zu vermeiden, dass die Sendeelemente mit dem Medium in Berührung kommen, sind sie in einer schützenden Hülle angeordnet.

Eine weitere Anordnung zur Bestimmung eines Füllstandes ist aus der US 8,933,789 B1 bekannt.

Der Erfindung liegt die Aufgabe zugrunde, eine Füllstandsschalteranordnung anzugeben, mit der auf vereinfachte Weise wenigstens eine Alarmschwelle realisiert werden kann.

Die Füllstandsschalteranordnung weist ein Sendeelement und ein Empfängerelement auf, wobei das Sendeelement zur Aussendung eines Funk-Signals dient und in Wirkzusammenhang mit dem Empfängerelement steht. Das Empfängerelement dient zur Detektion des Funk-Signals und ist derart ausgebildet, dass es bei einer durch das Medium bedingten Veränderung des empfangenen Signals ein Schaltsignal generiert und ausgibt. Es liegt eine Anordnung aus einem Sendeelement und einem Empfängerelement und eine Verwendung von Funk-Signalen vor, der Füllstandsschalteranordnung liegt also ein "Sender-Empfänger-Prinzip" zugrunde.

Die Veränderung des von dem Sendeelement ausgesandten und dem Empfängerelement empfangenen Funk-Signals erfolgt durch eine Dämpfung des Signals durch das Medium. Die Stärke der Dämpfung ist dabei abhängig von der jeweiligen Beschaffenheit des Mediums. Die Dämpfung kann auch so stark sein, dass gar kein Signal mehr bei dem Empfängerelement ankommt. Auch ein Ausbleiben des empfangenen Funksignals ist somit eine Veränderung des empfangenen Signals im erfmdungsgemäßen Sinne, die erkannt wird und durch die ein Schaltsignal generiert und ausgegeben wird. Das Schaltsignal kann derartig sein, dass durch das Schaltsignal Kontrollausgänge geschaltet werden.

Ebenfalls denkbar ist, dass das Schaltsignal an eine Leitwarte abgesetzt wird. Die Leitwarte kann dann entsprechende weitere Maßnahmen ergreifen.

Eine Veränderung des Funk-Signals kann erfolgen, wenn das Sendeelement mit Medium bedeckt ist, oder aber auch, wenn das Empfängerelement mit Medium bedeckt ist. Bei nur einem Sendeelement und nur einem Empfängerelement ist grundsätzlich nicht zu unterscheiden, welches der beiden Elemente mit Medium bedeckt ist. Mit einer konkreten Unterscheidungsmöglichkeit befassen sich Ausführungsformen der erfindungsgemäßen Füllstandsschalteranordnung, auf die weiter unten eingegangen wird.

Wenn es heißt, dass das Sendeelement und das Empfängerelement in Wirkzusammenhang zueinander stehen, dann bedeutet das, dass das Sendeelement und das Empfängerelement so zueinander ausgerichtet sind, dass das Empfängerelement die von dem Sendeelement ausgesandten Funk-Signale empfangen kann, die Signale also auf das Empfängerelement auftreffen.

Eine bevorzugte Ausführungsform der erfindungsgemäßen Füllstandsschalteranordnung zeichnet sich dadurch aus, dass das Sendeelement und das Empfängerelement als ein kombiniertes Sende-Empfang-Element ausgebildet sind. Die Füllstandsschalteranordnung weist dann einen Reflektor zur Reflektion des ausgesandten Funk-Signals auf, wobei der Reflektor im Wirkzusammenhang mit dem Sende-Empfang-Element steht, derart, dass das ausgesendete Funk-Signal in Richtung des Sende-Empfang-Elements reflektiert wird. Das von dem Sende-Empfang-Element ausgesandte Funk-Signal trifft demnach auf den Reflektor und wird zu dem Sende-Empfang-Element zurück reflektiert, wo es dann empfangen wird.

Eine besonders bevorzugte Ausführungsform der erfindungsgemäßen Füllstandsschalteranordnung ist dadurch gekennzeichnet, dass das Sendeelement ein ungerichtetes Funk-Signal aussendet. Der Vorteil an dieser Ausgestaltung ist, dass bei einem ungerichteten Funk-Signal Sendeelement und Empfängerelement nicht direkt zueinander ausgerichtet sein müssen, um im Wirkzusammenhang stehen zu können, da ein ungerichtetes Signal an jeder Stelle des Behältnisses empfangen werden kann. Sendeelement und Empfängerelement können dann beispielsweise als getrennte Elemente auf der gleichen Behältnisseite angeordnet sein. Das Empfängerelement weist bevorzugt eine unspezifische Richtungscharakteristik auf, sodass es das ungerichtete Signal des Senderelements empfangen kann.

Eine weitere Ausführungsform der erfindungsgemäßen Füllstandsschalteranordnung ist dadurch gekennzeichnet, dass das Sendeelement derart ausgebildet ist, dass das ausgesandte Funk-Signal mit einer ersten Kodierung kodiert ist und dass das Empfängerelement eine Dekodierungseinheit aufweist, derart, dass das Empfängerelement das mit der ersten Kodierung kodierte Funk-Signal dem ersten Sendeelement zuordnet. Das Schaltsignal wird nur dann generiert und ausgegeben, wenn das dem ersten Sendeelement zugeordnete Funk-Signal eine Veränderung aufweist. Diese Ausführungsform erweist sich insbesondere dann als vorteilhaft, wenn sich das Medium in einem nicht geschlossenen Behältnis befindet. Dann nämlich können gegebenenfalls weitere externe Signale auf das Empfängerelement auftreffen, so dass das von dem Sendeelement ausgesandte Signal ohne eine Kodierung nicht gesondert als das von dem Sendeelement ausgesandte Signal erkannt werden kann. Durch die Kodierung kann das Empfängerelement zweifelsfrei erkennen, ob das empfangene Signal von dem Sendeelement stammt, oder ob es sich um ein externes Signal handelt. Eine Kodierung des ausgesandten Funk-Signals kann beispielsweise durch eine Modulation des Funk-Signals oder durch eine Überlagerung des Funk-Signals mit einem weiteren Signal erfolgen. Ebenfalls denkbar ist, dass die Kodierung durch die Verwendung einer vorbestimmten Frequenz erfolgt. Die Dekodierungseinheit ist dann als ein entsprechender Bandpass ausgebildet, der auf die vorbestimmte Frequenz abgestimmt ist.

Eine weitere Ausführungsform ist dadurch gekennzeichnet, dass die Füllstandsschalteranordnung mindestens ein zweites Sendeelement zur Aussendung eines zweiten Funk-Signals aufweist. Das zweite Sendeelement ist dabei derart ausgestaltet, dass das zweite Funk-Signal mit einer zweiten Kodierung kodiert ist. Die Dekodierungseinheit des Empfängerelements ist ferner derart ausgebildet, dass das Empfängerelement das empfangene und mit der zweiten Kodierung kodierte Funk-Signal dem zweiten Sendeelement zuordnet. Bei einer Veränderung des zweiten Funk-Signals generiert das Empfängerelement ein zweites Schaltsignal und gibt es aus. Das zweite Sendeelement steht ebenfalls in Wirkzusammenhang mit dem Empfängerelement. Das zweite Sendeelement kann ebenfalls bevorzugt ein ungerichtetes Funk-Signal aussenden. Der Vorteil der Verwendung eines zweiten Sendeelements besteht darin, dass eine weitere Füllstandsschalterschwelle bzw. Alarmschwelle realisiert wird.

In einer bevorzugten Ausführungsform ist das erste Sendeelement in einer Höhe h₁ in dem Behältnis angeordnet und das zweite Sendeelement in einer Höhe h₂. Die erste Höhe h₁ und die zweite Höhe h₂ sind dabei unterschiedlich. Erreicht der Füllstand des Mediums in dem Behältnis die erste Höhe h₁, so wird das von dem ersten Sendeelement ausgesandte Funk-Signal durch das Medium verändert. Diese Veränderung wird von dem Empfängerelement erkannt und ein erstes Schaltsignal ausgegeben. Steigt der Füllstand des Mediums weiter bis auf die Höhe h₂, so wird das von dem zweiten Sendeelement ausgesandte Funk-Signal ebenfalls durch das Medium verändert. Auch diese Veränderung des zweiten Funk-Signals wird von dem Empfängerelement erkannt und ein zweites Schaltsignal ausgegeben. Das Empfängerelement ist hierbei in einer Höhe oberhalb der Höhe h₂ angeordnet.

Die erfindungsgemäße Füllstandsschalteranordnung ist nicht auf die Verwendung von zwei Sendeelementen begrenzt. Vielmehr können n Sendeelement vorgesehen sein, die insbesondere in n verschiedenen Höhen in dem Behältnis angeordnet sind. Die n verschiedenen Sendeelemente senden n verschieden kodierte Funk-Signale aus, die jeweils von der Dekodierungseinheit des Empfängerelements dem jeweiligen Sendeelement zugeordnet werden können. Die erfindungsgemäße Füllstandsschalteranordnung ermöglicht also auf sehr einfache und unkomplizierte Art und Weise eine Bestimmung einer beliebigen Anzahl von Füllständen.

Bisher ist der Fall betrachtet worden, in dem nur ein Empfängerelement und mehrere Sendeelemente vorgesehen sind. Durch die Kodierung der Signale und die Dekodierungseinheit können die Signale eindeutig den jeweiligen Sendeelementen zugeordnet werden und so die der Anordnungshöhe der Sendeelemente entsprechenden Füllstände erkannt bzw. bestimmt werden.

Eine weitere Ausführungsform der erfindungsgemäßen Füllstandsschalteranordnung sieht vor, dass sie mindestens ein zweites Empfängerelement aufweist. Weist die Füllstandsschalteranordnung also beispielsweise ein Sendeelement und ein erstes und ein zweites Empfängerelement auf, wobei das erste Empfängerelement und das zweite Empfängerelement in unterschiedlichen Höhen in dem Behältnis angeordnet sind, detektiert das erste Empfängerelement eine Veränderung des Funk-Signals, wenn der Füllstand des Mediums die Höhe des ersten Empfängerelements erreicht hat, generiert ein erstes Schaltsignal und gibt dieses aus. Erreicht der Füllstand dann die Höhe des zweiten Empfängerelements, detektiert das zweite Empfängerelement eine Veränderung des Funk-Signals, generiert ein zweites Schaltsignal und gibt dieses aus. Bevorzugt ist das Sendeelement in einer Höhe über dem höchsten Empfängerelement in dem Behältnis angeordnet. Auch diese Ausführungsform der erfindungsgemäßen Füllstandsschalteranordnung ist nicht auf die Verwendung von zwei Empfängerelementen begrenzt. Vielmehr können m verschiedene Empfängerelemente auf m verschiedenen Höhen angeordnet verwendet werden, um m Füllstände zu erkennen.

Die erfindungsgemäße Füllstandsschalteranordnung ist dadurch gekennzeichnet, dass das Sendeelement eine Detektionsfläche aufweist und dass das Sendeelement ein Schaltsignal generiert und ausgibt, wenn die Detektionsfläche mit Medium in Berührung kommt.

Die Ausführungen gelten für jedes in der Füllstandsschalteranordnung verwendete Sendeelement. Das Sendeelement ist nunmehr mit einer eigenen

Auswerteeinheit ausgestattet, sodass es selbst detektieren kann, wenn der Füllstand des Mediums auf der Höhe des Sendeelements ist. Diese zusätzliche Füllstandsinformation dient einer redundanten Signalauswertung, wodurch ein erhöhtes Sicherheitslevel der Füllstandsschalteranordnung erreicht werden kann. Nunmehr werden bei einem Füllstand zwei Schaltsignale generiert und entweder intern verarbeitet oder ausgesandt, wenn der Füllstand des Mediums auf die Höhe des jeweiligen Sendeelements angestiegen ist, nämlich das erste von dem Empfängerelement und das zweite von dem Sendeelement selber. Werden beide Schaltsignale zu der Leitwarte geschickt, kann hier ein Abgleich der Schaltsignale stattfinden. Sollte ein Schaltsignal ausfallen, beispielsweise weil das Empfängerelement einen Fehler aufweist und nicht zuverlässig arbeitet, wird trotzdem das zweite Schaltsignal von dem Sendeelement selbst ausgegeben, sodass der Füllstand trotz Ausfall des Empfängerelements zuverlässig detektiert wird und entsprechend gehandelt werden kann, beispielsweise das Schalten von Kontrollausgängen trotzdem stattfindet. Das von dem Sendeelement ausgesandte Schaltsignal ist eindeutig dem Sendeelement zuzuordnen. So kann garantiert werden, dass bei der Verwendung mehrerer Sendeelemente die mehreren Schaltsignale voneinander unterschieden werden können.

Eine weitere bevorzugte Ausgestaltung der Füllstandsschalteranordnung sieht vor, dass das Sendeelement einen Sensor zur Detektion einer physikalischen Größe des Mediums aufweist. Das Sendeelement ist dabei derart ausgebildet, dass es die detektierte Größe in ein sekundäres Funk-Signal umwandelt und aussendet. Das Empfängerelement übermittelt das sekundäre Funk-Signal an eine Auswerteeinheit, welche einen Wert für die detektierte physikalische Größe ausgibt. Der Sensor kann beispielsweise ein Temperatursensor sein. Ebenfalls denkbar ist ein pH-Sensor oder beispielsweise ein Druck-Sensor. Sind mehrere Sendeelemente vorhanden, dann können alle Sendeelemente den gleichen Sensortyp aufweisen, also beispielsweise alle einen Temperatursensor aufweisen. So könnte an verschiedenen Stellen in dem Behältnis beispielsweise die Temperatur des Mediums gemessen werden. Ebenfalls denkbar ist, dass den verschiedenen Sendeelementen verschiedene Sensoren zugeordnet sind, das erste Sendeelement beispielsweise einen Temperatursensor aufweist und das zweite Sendeelement einen pH-Sensor.

Die Erfindung betrifft des Weiteren ein Verfahren zum Bestimmen des Füllstandes eines Mediums in einem Behältnis mit einer Füllstandsschalteranordnung. Die Füllstandsschalteranordnung weist ein Sendeelement zur Aussendung eines Funk-Signals und ein Empfängerelement zur Detektion des Funk-signals auf, wobei das Sendeelement in Wirkzusammenhang mit dem Empfängerelement steht und wobei das Sendeelement eine Detektionsfläche aufweist. Das erfindungsgemäße Verfahren weist sich dadurch aus, dass in einem ersten Schritt ein Funk-Signal von dem Sendeelement ausgesendet wird und in einem zweiten Schritt das Funk-Signal von dem Empfängerelement empfangen wird. In einem dritten Schritt wird das empfangene Funk-Signal mit einem vorgegebenen Vergleich-Funksignal verglichen. Bei einer durch den Vergleich festgestellten Abweichung des empfangenen Funk-Signals von dem Vergleich-Funksignal wird in einem vierten Schritt ein Schaltsignal von dem Empfängerelement generiert und ausgegeben. Bei dem erfindungsgemäßen Verfahren wird ferner in einem zusätzlichen Schritt ein Schaltsignal von dem Sendeelement generiert und ausgegeben, wenn die Detektionsfläche des Sendeelements mit Medium in Berührung kommt.Bevorzugt wird ein ungerichtetes Funk-Signal von dem Sendeelement ausgesendet, das dann von dem Empfängerelement empfangen wird. Das erfindungsgemäße Verfahren basiert demnach auf einem Sender-Empfänger-Prinzip und stellt eine unkomplizierte Variante zur Bestimmung des Füllstandes eines Mediums dar.

Eine bevorzugte Ausführungsform des erfindungsgemäßen Verfahrens, bei dem das Empfängerelement der Füllstandsschalteranordnung eine Dekodierungseinheit aufweist, ist dadurch gekennzeichnet, dass das von dem Sendeelement ausgesendete Funk-Signal mit einer ersten Kodierung kodiert wird, das kodierte Funk-Signal von der Dekodierungseinheit dekodiert wird und das Funk-Signal dem Sendeelement zugeordnet wird. Bei dieser erfindungsgemäßen Ausführungform wird ein Schaltsignal nur dann generiert und ausgesendet, wenn das kodierte Funk-Signal eine Veränderung aufweist. Durch diese Ausführungsform kann garantiert werden, dass es nicht zu Fehlausgaben von Schaltsignalen aufgrund von externen Funk-Signalen kommt, die nicht von dem Sendeelement ausgesandt worden sind.

Eine weitere bevorzugte Ausführungsform des erfindungsgemäßen Verfahrens, bei dem die Füllstandsschalteranordnung ein zweites Sendeelement aufweist, ist dadurch gekennzeichnet, dass in einem fünften Schritt ein Funk-Signal von dem zweiten Sendeelement ausgesendet wird, dass in einem sechsten Schritt das Funk-Signal von dem Empfängersignal empfangen wird, in einem siebten Schritt das empfangene Funk-Signal mit einem vorgegebenen Vergleich-Funksignal verglichen wird und in einem achten Schritt bei einer durch den Vergleich festgestellten Abweichung des empfangenen Funk-Signals von dem Vergleich-Funksignal ein Schaltsignal von dem Empfängerelement generiert und ausgegeben wird. Bei dem erfindungsgemäßen Verfahren finden demnach zwei Schaltvorgänge statt, nämlich ein erster bei der Detektion einer Veränderung des ersten Funk-Signals, das von dem ersten Sendeelement ausgesandt wurde und ein zweiter bei der Detektion einer Veränderung des zweiten Funk-Signals, das von dem zweiten Sendeelement ausgesandt wurde. Das erfindungsgemäße Verfahren ermöglicht die Detektion von zwei verschiedenen Füllständen, wenn das erste und zweite Sendeelement in verschiedenen Höhen in dem Behältnis angeordnet sind, auf einfache Art und Weise.

Eine weitere Ausführungsform des erfindungsgemäßen Verfahrens zeichnet sich dadurch aus, dass in einem zusätzlichen Schritt eine physikalische Größe des Mediums durch einen Sensor in dem Sendeelement erfasst wird. Die erfasste Größe wird dann in ein sekundäres Signal umgewandelt, das dem Funk-Signal überlagert wird. Das sekundäre Signal wird von der Empfängereinheit an eine Auswerteeinheit übermittelt und die Auswerteeinheit gibt einen Wert für die physikalische Größe aus.

Der Erfindung liegt insgesamt die Idee zugrunde, wenigstens ein an sich bekanntes Sendeelement und wenigstens ein an sich bekanntes Empfangselement in einer ungewohnten Weise zu verwenden, nämlich so, dass sie einen oder mehrere Füllstandsschalter realisieren. Die Erfindung betrifft daher ebenfalls die Verwendung eines Sendeelements zur Aussendung eines Funk-Signals und eines Empfängerelements zum Empfangen des Funk-Signals für eine Füllstandsschalteranordnung zur Bestimmung des Füllstands eines Mediums in einem Behältnis, wobei das Sendeelement zur Aussendung eines Funk-Signals dient und in Wirkzusammenhang mit dem Empfängerelement steht. Das Empfängerelement dient zur Detektion des Funk-Signals und ist derart ausgebildet, dass es bei einer durch das Medium bedingten Veränderung des empfangenen Signals ein Schaltsignal generiert und ausgibt. Für die weitere Verwendung eines Sendeelements und eines Empfängerelements für eine Füllstandsschalteranordnung gelten ebenfalls die im Zusammenhang mit der Vorrichtung und/oder in Zusammenhang mit dem Verfahren gemachten Ausführungen.

Da sich das erfindungsgemäße Verfahren und die erfindungsgemäße Verwendung auf die Bestimmung eines Füllstandes mit einer erfindungsgemäßen Füllstandsschalteranordnung beziehen, sind sämtliche im Rahmen der Beschreibung der erfindungsgemäßen Füllstandsschalteranordnung gemachten Ausführungen ebenfalls auf das erfindungsgemäße Verfahren und die erfindungsgemäße Verwendung zu beziehen und umgekehrt. Dies gilt insbesondere auch für die Bestimmung einer Mehrzahl von Füllständen mit einer Mehrzahl von Empfängerelementen, statt einer Mehrzahl von Sendeelementen.

Im Einzelnen gibt es nun eine Vielzahl von Möglichkeiten, die erfindungsgemäße Füllstandsschalteranordnung und das erfindungsgemäße Verfahren auszugestalten und weiterzubilden. Dazu wird verwiesen auf die den unabhängigen Patentansprüchen nachgeordneten Patentansprüche sowie auf die nachfolgende Beschreibung bevorzugter Ausführungsbeispiele der Erfindung unter Bezugnahme auf die Zeichnung. In der Zeichnung zeigt
- Fig. 1: eine schematische Darstellung einer Füllstandsschalteranordnung mit einem Sendeelement und einem Empfängerelement,
- Fig. 2: eine schematische Darstellung einer Füllstandsschalteranordnung, bei der das Sendeelement und das Empfängerelement in einem kombinierten Sende-Empfang-Element ausgebildet sind,
- Fig. 3: eine weitere schematische Darstellung einer Füllstandsschalteranordnung,
- Fig. 4: eine schematische Darstellung einer Füllstandsschalteranordnung mit mehreren intelligenten Sendeelementen und einem Empfängerelement,
- Fig. 5: eine schematische Darstellung einer Füllstandsschalteranordnung mit mehreren Empfängerelementen und einem Sendeelement,
- Fig. 6: eine schematische Darstellung einer Füllstandsschalteranordnung mit mehreren Sendeelementen und einem Empfängerelement, bei der die Sendeelemente Sensoren zur Detektion physikalischer Größen des Mediums aufweisen,
- Fig. 7: ein Blockdiagramm einer ersten Ausführungsform des Verfahrens,
- Fig. 8: ein Blockdiagramm einer zweiten Ausführungsform des Verfahrens,
- Fig. 9: ein Blockdiagramm einer dritten Ausführungsform des Verfahrens und
- Fig. 10: ein Blockdiagramm einer vierten Ausführungsform des Verfahrens.

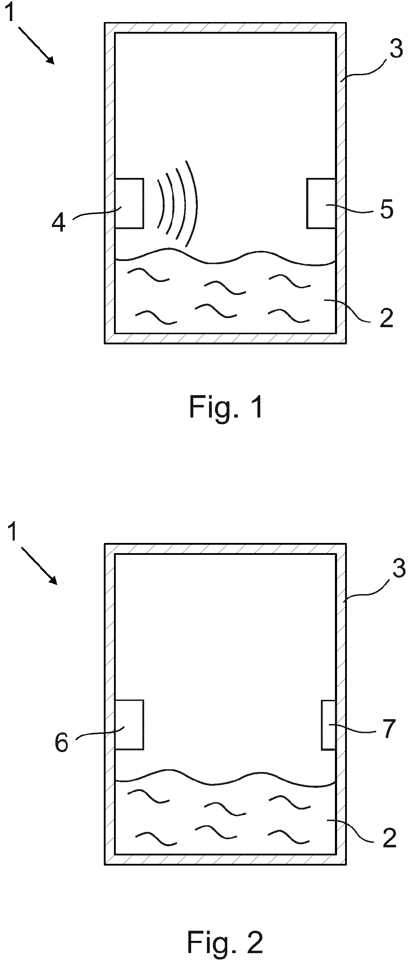

In Fig. 1 schematisch dargestellt ist eineFüllstandsschalteranordnung 1 zur Bestimmung des Füllstandes eines Mediums 2 in einem Behältnis 3. Die Füllstandsschalteranordnung 1 weist ein Sendeelement 4 auf, das ein Funk-Signal aussendet. Des Weiteren weist die Füllstandsschalteranordnung 1 ein Empfängerelement 5 auf, das im Wirkzusammenhang mit dem Sendeelement 4 steht und das Funk-Signal empfängt. Erreicht das Medium 2 einen Füllstand auf Höhe des Sendeelements 4 oder des Empfängerelements 5, muss sich das Funk-Signal also durch das Medium 2 ausbreiten, dann kommt es zu einer Veränderung des Funk-Signals durch das Medium 2. Die Veränderung kann sich beispielsweise in einer Dämpfung des Funk-Signals bemerkbar machen. Das Empfängerelement 5 ist derart ausgebildet, dass es bei einer Veränderung des empfangenen Funk-Signals ein Schaltsignal generiert und ausgibt. Die Füllstandsschalteranordnung 1 bedient sich also des Sender-Empfänger-Prinzips.

Fig. 2 zeigt eine Ausführungsform der Füllstandsschalteranordnung 1, bei der das Sendeelement und das Empfängerelement in einem einzigen Sende-Empfang-Element 6 ausgebildet sind. Die Füllstandsschalteranordnung 1 weist dann zusätzlich einen Reflektor 7 auf. Das Sende-Empfang-Element 6 und der Reflektor 7 stehen dabei derart in Wirkzusammenhang, dass das von dem Sende-Empfang-Element 6 ausgesendete Funk-Signal auf den Reflektor 7 trifft und dort wieder in Richtung des Sende-Empfang-Elements 6 reflektiert wird, sodass es von dem Sende-Empfang-Element 6 empfangen werden kann. Auch hier wird bei einer Veränderung des empfangenen Funk-Signals ein Schaltsignal generiert und ausgegeben.

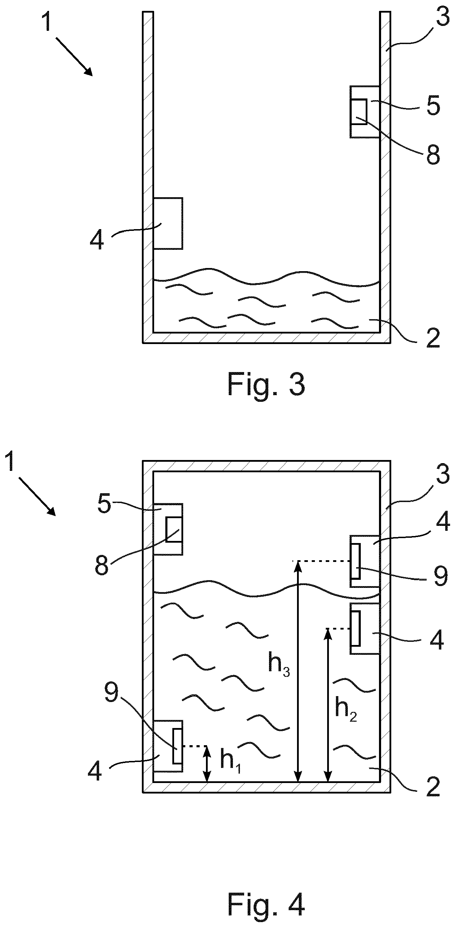

Im Unterschied zu der in Fig. 1 und Fig. 2 gezeigten Füllstandsschalteranordnung 1 sind bei der in Fig. 3 dargestellten Füllstandsschalteranordnung 1 das Sendeelement 4 und das Empfängerelement 5 nicht auf einer Höhe in dem Behältnis 3 angeordnet. Vielmehr ist das Empfängerelement 5 höher angeordnet, als das Sendeelement 4. Das dargestellte Sendeelement 4 weist sich dadurch aus, dass es ein ungerichtetes Funk-Signal aussendet. Das hat den Vorteil, dass das Empfängerelement 5 an einem beliebigen Ort in dem Behältnis 3 angeordnet sein kann und das ungerichtete Funk-Signal trotzdem empfangen kann. Das Empfängerelement 5 weist dann eine unspezifische Richtungscharakteristik auf.

Das in Fig. 3 dargestellte Behältnis 3 ist im Gegensatz zu den in Fig. 1 und Fig. 2 dargestellten Behältnissen 3 nicht geschlossen, sondern oben geöffnet. Dadurch, dass das Behältnis 3 geöffnet ist, können Funk-Signale aus der Umgebung in das Behältnis 3 fallen und auf das Empfängerelement 5 treffen. Für das Empfängerelement 5 wäre es nicht möglich, zu unterscheiden, ob das empfangene Funk-Signal das von der Sendeelement 4 ausgesandte Funk-Signal, oder ein Funk-Signal aus der Umgebung ist. Um eine derartige Unterscheidung dennoch zu gewährleisten und somit eine Fehlschaltung der Füllstandsschalteranordnung zu verhindern, ist das Sendeelement 4 derart ausgebildet, dass das ausgesandte Funk-Signal mit einer ersten Kodierung kodiert ist. Das Empfängerelement 5 weist eine Dekodierungseinheit 8 auf, derart, dass das Empfängerelement 5 das mit der ersten Kodierung kodierte Funk-Signal dem Sendeelement 4 zuordnet. Das Empfängerelement 5 generiert nur dann ein Schaltsignal und gibt es aus, wenn es eine Veränderung des dem Sendeelement 4 zugeordneten Signals erkennt. Trifft nun ein externes Funk-Signal auf das Empfängerelement 5 und verändert sich dieses externe Funk-Signal, so wird kein Schaltsignal generiert.

In Fig. 4 dargestellt ist eine Füllstandsschalteranordnung 1 mit drei Sendeelementen 4 und einem Empfängerelement 5. Die Sendeelemente 4 sind in drei verschiedenen Höhen h₁, h₂ und h₃ in dem Behältnis 3 angeordnet. Jedes der drei Sendeelemente 4 sendet ein Funk-Signal mit einer dem jeweiligen Sendeelement 4 zugeordneten Kodierung aus. Das Empfängerelement 5 weist eine Dekodierungseinheit 8 auf, derart, dass das Empfängerelement 5 die empfangenen Funk-Signale den jeweiligen Sendeelementen 4 zuordnen kann. Erreicht der Füllstand des Mediums 2 die erste Höhe h₁, so führt das zu einer Veränderung des von dem ersten Sendeelement 4 ausgesandten Funk-Signals. Diese Veränderung wird detektiert, sodass das Empfängerelement 5 ein erstes Schaltsignal generiert und ausgibt. Steigt der Füllstand des Mediums 2 weiter auf die Höhe h₂, so führt das zu einer Veränderung des von dem zweiten Sendeelement 4 ausgesandten Funk-Signals. Diese Veränderung wird ebenfalls detektiert, und da das Empfängerelement 5 durch die Dekodierungseinheit 8 das veränderte Funk-Signal dem zweiten Sendeelement 4 zuordnet, wird ein zweites Schaltsignal generiert und ausgegeben. Ein weiterer Anstieg des Füllstandes des Mediums 2 auf die Höhe h₃ des dritten Sendeelements 4 führt zu einer Veränderung des von dem dritten Sendeelement 4 ausgesandten Funk-Signals, die das Empfängerelement 5 detektiert und demnach ein drittes Schaltsignal generiert und ausgibt. Mit der Füllstandsschalteranordnung 1 ist es also auf sehr einfache und elegante Weise ohne großen Aufwand möglich, mehrere Füllstände des Mediums 2 zu bestimmen und entsprechend zu schalten.

Die Sendeelemente 4 in Fig. 4 weisen zusätzlich eine Detektionsfläche 9 auf. Die Detektionsfläche 9 ist derart ausgebildet, dass sie detektiert, wenn sie mit Medium 2 in Berührung kommt. Kommt die Detektionsfläche 9 mit Medium 2 in Berührung, dann generiert das Sendeelement 4 ein Schaltsignal und gibt es aus. Durch die Ausgestaltung eines "intelligenten" Sendeelements 4 wird die Sicherheit der Füllstandsschalteranordnung 1 erhöht. Bei dem Ausfall beispielsweise des Empfängerelements 5 oder bei einer Störung der Aussendung des Schaltsignals des Empfängerelements 5 ist die Füllstandsschalteranordnung 1 dennoch funktionsfähig aufgrund des von dem Sendeelement 4 generierten und ausgegebenen Schaltsignals.

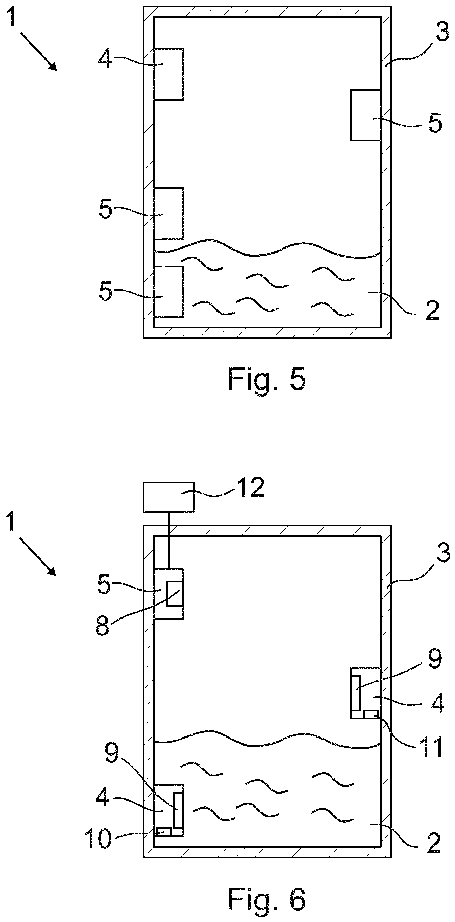

Fig. 5 zeigt eine Ausgestaltung der Füllstandsschalteranordnung 1, die ein Sendeelement 4 und drei Empfängerelemente 5 aufweist. Auch mit dieser Anordnung können zuverlässig drei verschiedene Schaltsignale erzeugt werden, nämlich ein erstes von dem ersten Empfängerelement 5, da eine Veränderung des von dem Sendeelement 4 ausgesandten Funk-Signals auch dann eintritt, wenn das Empfängerelement 5 mit Medium bedeckt ist, ein zweites Schaltsignal von dem zweiten Empfängerelement 5, sobald der Füllstand die Höhe des zweiten Empfängerelements 5 erreicht und ein drittes Schaltsignal von dem dritten Empfängerelement 5, sobald der Füllstand die Höhe des dritten Empfängerelements 5 erreicht.

Die in Fig. 6 dargestellte Füllstandsschalteranordnung 1 weist Sendeelemente 4 auf, die neben der Detektionsfläche 9 einen Sensor aufweisen, der zur Detektion einer physikalischen Größe des Mediums 2 dient. Eines der dargestellten Sendeelemente 4 weist dabei einen Temperatursensor 10 auf, das andere der dargestellten Sendeelemente 4 weist einen pH-Sensor 11 auf. Die Sendeelemente 4 sind derart ausgebildet, dass sie die jeweils detektierte Größe in ein sekundäres Funk-Signal umwandeln und aussenden. Das Empfängerelement 5 übermittelt die sekundären Funk-Signale an eine Auswerteeinheit 12, die einen Wert für die jeweilige detektierte physikalische Größe ausgibt, also im vorliegenden Fall einen Wert für die Temperatur des Mediums 2 und, wenn der pH-Sensor 11 mit dem Medium 2 in Berührung kommt, einen Wert für den ph-Wert des Mediums 2.

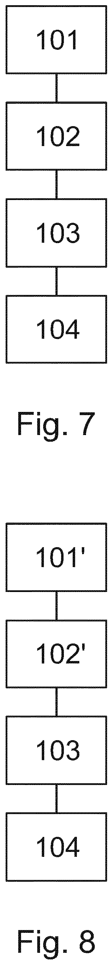

Fig. 7 zeigt ein Blockschaltbild einer Ausführungsform des Verfahrens zur Bestimmung des Füllstandes mit der Füllstandsschalteranordnung 1. In einem ersten Schritt 101 wird ein Funk-Signal von dem Sendeelement 4 ausgesendet. Das Funk-Signal wird dann in einem zweiten Schritt 102 von dem Empfängerelement 5 empfangen. In einem dritten Schritt 103 wird das empfangene Funk-Signal mit einem Vergleichs-Funksignal verglichen. In einem vierten Schritt 104 wird dann bei einer durch den Vergleich festgestellten Abweichung des empfangenen Funk-Signals von dem Vergleich-Funksignal ein Schaltsignal von dem Empfängerelement 5 generiert und ausgegeben. Bei dem ausgesandten Funk-Signal kann es sich um ein gerichtetes, insbesondere aber auch um ein ungerichtetes Funk-Signal handeln.

Eine Abwandlung des Verfahrens ist in dem Blockschaltbild in Fig. 8 dargestellt. Hier wird in dem Schritt 101' das ausgesandte Funk-Signal mit einer ersten Kodierung kodiert. In dem Schritt 102' wird das empfangene kodierte Funk-Signal mit Hilfe einer Dekodierungseinheit 8 in dem Empfängerelement 5 dekodiert und dem Sendeelement 4 eindeutig zugeordnet. Das dem Sendeelement 4 zugeordnete Funk-Signal wird dann in dem Schritt 103 mit einem Vergleichs-Funksignal verglichen und in dem Schritt 104 dann bei einer durch den Vergleich festgestellten Abweichung des empfangenen kodierten Funk-Signals von dem Vergleich-Funksignal ein Schaltsignal von dem Empfängerelement 5 generiert und ausgegeben. Die Schritte 103 und 104 werden nur dann durchgeführt, wenn das empfangene Funk-Signal aufgrund der Kodierung dem Sendeelement 4 eindeutig zugeordnet werden konnte. Trifft ein Funk-Signal auf die Empfängereinheit 5, das nicht die Kodierung aufweist und somit nicht dem Sendeelement 4 zuzuordnen ist, dann findet kein Abgleich mit dem Vergleich-Funksignal statt und wird auch kein Schaltsignal generiert. Damit wird durch das Verfahren eine Fehlausgabe des Schaltsignals aufgrund von externen störenden Funk-Signalen verhindert.

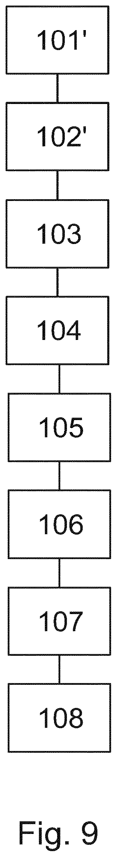

Das Blockschaltbild dargestellt in Fig. 9 weist zusätzliche Verfahrensschritte 105, 106, 107 und 108 auf. Das in Fig. 9 dargestellte Verfahren zeigt die Bestimmung des Füllstandes eines Mediums mit einer Füllstandsschalteranordnung, die ein zweites Sendeelement 4 aufweist. In dem zusätzlichen Verfahrensschritt 105 wird von dem zweiten Sendeelement 4 ein zweites Funk-Signal ausgesendet. In dem Schritt 106 wird das zweite Funk-Signal von dem Empfängerelement 5 empfangen. In dem Schritt 107 findet dann ein Vergleich zwischen dem empfangenen zweiten (kodierten und dem zweiten Sendeelement 4 zugeordneten) Funk-Signal mit einem Vergleichs-Funksignal statt. In dem Schritt 108 wird von dem Empfängerelement 5 dann ein Schaltsignal generiert und ausgegeben, wenn in dem Vergleich eine Abweichung des zweiten Funk-Signals von dem Vergleichs-Funksignal festgestellt wird. Das zweite Funk-Signal ist bevorzugt mit einer zweiten Kodierung kodiert. Die Dekodierungseinheit 8 des Empfängerelements 5 ist dann derart ausgebildet, dass das Empfängerelement 5 mit Hilfe der Dekodierungseinheit 8 das zweite mit der zweiten Kodierung kodierte Funk-Signal dem zweiten Sendeelement 4 zugeordnet.

Das Verfahren ermöglicht eine einfache Bestimmung von zwei Füllständen. Das Verfahren ist aber nicht begrenzt auf die Bestimmung von zwei Füllständen, vielmehr kann mit einer entsprechenden Anzahl an Sendeelementen eine Vielzahl von Füllständen bestimmt werden.

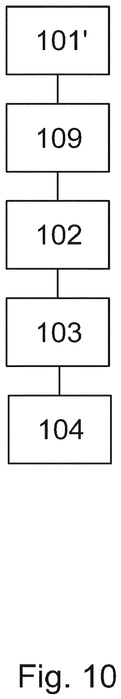

Schließlich ist in dem in Fig. 10 dargestellten Verfahren ein weiterer Verfahrensschritt 109 dargestellt. In dem Verfahrensschritt 109 wird eine physikalische Größe des Mediums 2 durch einen Sensor 10, 11 in dem Sendeelement 4 erfasst und in ein sekundäres Funk-Signal umgewandelt. Das sekundäre Funk-Signal wird sodann dem von dem Sendeelement 4 ausgesandten Funk-Signal überlagert. Das empfangene sekundäre Funk-Signal wird dann von dem Empfängerelement 5 an eine Auswerteeinheit 12 übermittelt und von dieser ein Wert für die physikalische Größe ausgegeben. Die physikalische Größe des Mediums kann beispielsweise die Temperatur, der Druck oder auch der pH-Wert sein.

### Bezugszeichen

- 1: Füllstandsschalteranordnung
- 2: Medium
- 3: Füllstand
- 4: Sendeelement
- 5: Empfängerelement
- 6: Sende-Empfang-Element
- 7: Reflektor
- 8: Dekodierungseinheit
- 9: Detektionsfläche
- 10: Sensor
- 11: Sensor
- 12: Auswerteeinheit

- 101: erster Verfahrensschritt
- 101': Kodierschritt
- 102: zweiter Verfahrens schritt
- 102': Dekodierschritt
- 103: dritter Verfahrensschritt
- 104: vierter Verfahrens schritt
- 105: fünfter Verfahrensschritt
- 106: sechster Verfahrens schritt
- 107: siebter Verfahrensschritt
- 108: achter Verfahrens schritt
- 109: Bestimmung einer physikalischen Größe des Mediums

## Patentansprüche

1. Füllstandsschalteranordnung (1) zur Bestimmung des Füllstandes eines Mediums (2) in einem Behältnis (3), aufweisend ein Sendeelement (4) und ein Empfängerelement (5), wobei das Sendeelement (4) zur Aussendung eines Funk-Signals dient und in Wirkzusammenhang mit dem Empfängerelement (5) steht, wobei das Empfängerelement (5) zur Detektion des Funk-Signals dient, wobei das Empfängerelement (5) derart ausgebildet ist, dass es bei einer durch das Medium (2) bedingten Veränderung des empfangenen Funk-Signals ein Schaltsignal generiert und ausgibt, und wobei das Sendeelement (4) eine Detektionsfläche (9) aufweist und das Sendeelement (4) ein Schaltsignal generiert und ausgibt, wenn die Detektionsfläche (9) mit Medium (2) in Berührung kommt.

2. Füllstandsschalteranordnung (1) nach Anspruch 1, **dadurch gekennzeichnet, dass** das Sendeelement (4) und das Empfängerelement (5) als ein kombiniertes Sende-Empfang-Element (6) ausgebildet sind und dass die Füllstandsschalteranordnung (1) einen Reflektor (7) zur Reflektion des ausgesandten Funk-Signals aufweist und der Reflektor (7) im Wirkzusammenhang mit dem Sende-Empfang-Element (6) steht, derart, dass das ausgesendete Funk-Signal in Richtung des Sende-Empfang-Elements (6) reflektiert wird.

3. Füllstandsschalteranordnung (1) nach Anspruch 1 oder 2, **dadurch gekennzeichnet, dass** das Sendeelement (4) ein ungerichtetes Funk-Signal aussendet.

4. Füllstandsschalteranordnung (1) nach einem der Ansprüche 1 bis 3, **dadurch gekennzeichnet, dass** das Sendeelement (4) derart ausgebildet ist, dass das ausgesandte Funk-Signal mit einer ersten Kodierung kodiert ist und dass das Empfängerelement (5) eine Dekodierungseinheit (8) aufweist, derart, dass das Empfängerelement (5) das mit der ersten Kodierung kodierte Funk-Signal dem ersten Sendeelement (4) zuordnet, wobei das Schaltsignal nur dann generiert und ausgegeben wird, wenn das dem ersten Sendeelement (4) zugeordnete Funk-Signal eine Veränderung aufweist.

5. Füllstandsschalteranordnung (1) nach Anspruch 4, **dadurch gekennzeichnet, dass** die Füllstandsschalteranordnung (1) mindestens ein zweites Sendeelement (4) zur Aussendung eines zweiten Funk-Signals aufweist, wobei das zweite Sendeelement (4) derart ausgestaltet ist, dass das zweite Funk-Signal mit einer zweiten Kodierung kodiert ist und wobei die Dekodierungseinheit (8) derart ausgebildet ist, dass das Empfängerelement (5) das mit der zweiten Kodierung kodierte Funk-Signal dem zweiten Sendeelement (4) zuordnet, wobei ein zweites Schaltsignal dann generiert und ausgegeben wird, wenn das dem zweiten Sendeelement (4) zugeordnete Funk-Signal eine Veränderung aufweist.

6. Füllstandsschalteranordnung (1) nach Anspruch 5, **dadurch gekennzeichnet, dass** das erste Sendeelement (4) in einer ersten Höhe h₁ in dem Behältnis (3) angeordnet ist und das zweite Sendeelement (4) in einer zweiten Höhe h₂ in dem Behältnis (3) angeordnet ist, wobei die erste Höhe h₁ und die zweite Höhe h₂ unterschiedlich sind.

7. Füllstandsschalteranordnung (1) nach einem der Ansprüche 1 bis 6, **dadurch gekennzeichnet, dass** die Füllstandsschalteranordnung (1) mindestens ein zweites Empfängerelement (5) aufweist.

8. Füllstandsschalteranordnung (1) nach einem der Ansprüche 1 bis 7, **dadurch gekennzeichnet, dass** das Sendeelement (4) einen Sensor (10, 11) zur Detektion einer physikalischen Größe des Mediums (2) aufweist, wobei das Sendeelement (4) derart ausgebildet ist, dass es die detektierte Größe in ein sekundäres Funk-Signal umwandelt und aussendet und wobei das Empfängerelement (5) das sekundäre Funk-Signal an eine Auswerteeinheit (12) übermittelt, welche einen Wert für die detektierte physikalische Größe ausgibt.

9. Verfahren zum Bestimmen des Füllstandes eines Mediums (2) in einem Behältnis (3) mit einer Füllstandsschalteranordnung (1), wobei die Füllstandsschalteranordnung (1) ein Sendeelement (4) zur Aussendung eines Funk-Signals und ein Empfängerelement (5) zur Detektion des Funk-Signals aufweist, wobei das Sendeelement (4) in Wirkzusammenhang mit dem Empfängerelement (5) steht und wobei das Sendeelement (4) eine Detektionsfläche (9) aufweist, wobei in einem ersten Schritt (101) ein Funk-Signal von dem Sendeelement (4) ausgesendet wird, in einem zweiten Schritt (102) das Funk-Signal von dem Empfängerelement (5) empfangen wird, in einem dritten Schritt (103) das empfangene Funk-Signal mit einem vorgegebenen Vergleich-Funksignal verglichen wird und in einem vierten Schritt (104) bei einer durch den Vergleich festgestellten Abweichung des empfangenen Funk-Signals von dem Vergleich-Funksignal ein Schaltsignal von dem Empfängerelement (5) generiert und ausgegeben wird und wobei in einem zusätzlichen Schritt ein Schaltsignal von dem Sendeelement (4) generiert und ausgegeben wird, wenn die Detektionsfläche (9) des Sendeelements (4) mit Medium (2) in Berührung kommt.

10. Verfahren nach Anspruch 9, wobei das Empfängerelement (5) der Füllstandsschalteranordnung (1) eine Dekodierungseinheit (8) aufweist, **dadurch gekennzeichnet, dass** das von dem Sendeelement (3) ausgesendete Funk-Signal mit einer ersten Kodierung kodiert wird (101'), das kodierte Funk-Signal von der Dekodierungseinheit (8) dekodiert wird und das Funk-Signal dem Sendeelement (4) zugeordnet wird (102').

11. Verfahren nach Anspruch 10, wobei die Füllstandsschalteranordnung (1) ein zweites Sendeelement (4) aufweist, **dadurch gekennzeichnet, dass** in einem fünften Schritt (105) ein Funk-Signal von dem zweiten Sendeelement (4) ausgesendet wird, dass in einem sechsten Schritt (106) das Funk-Signal von dem Empfängerelement (5) empfangen wird, in einem siebten Schritt (107) das empfangene Funk-Signal mit einem vorgegebenen Vergleich-Funksignal verglichen wird und in einem achten Schritt (108) bei einer durch den Vergleich festgestellten Abweichung des empfangenen Funk-Signals von dem Vergleich-Funksignal ein Schaltsignal von dem Empfängerelement (5) generiert und ausgegeben wird.

12. Verfahren nach einem der Ansprüche 9 bis 11, **dadurch gekennzeichnet, dass** in einem zusätzlichen Schritt (109) eine physikalische Größe des Mediums (2) durch einen Sensor (10, 11) in dem Sendeelement (4) erfasst wird, dass die erfasste Größe in ein sekundäres Signal umgewandelt wird, dass das sekundäre Signal dem Funk-Signal überlagert wird, dass das sekundäre Signal von dem Empfängerelement (5) an eine Auswerteeinheit (12) übermittelt wird und dass die Auswerteeinheit (12) einen Wert für die physikalische Größe ausgibt.

## Claims

1. Fill level switch arrangement (1) for determining the fill level of a medium (2) in a container (3), having a transmitting element (4) and a receiving element (5), wherein the transmitting element (4) is used to transmit a radio signal and is operatively connected to the receiving element (5), wherein the receiving element (5) is used to detect the radio signal, wherein the receiving element (5) is designed such that it generates and outputs a switching signal in the event of a change in the received radio signal caused by the medium (2), and wherein the transmitting element (4) has a detection surface (9) and the transmitting element (4) generates and outputs a switching signal when the detection surface (9) comes into contact with medium (2).

2. Fill level switch arrangement (1) according to claim 1, **characterized in that** the transmitting element (4) and the receiving element (5) are designed as a combined transceiver element (6), and that the fill level switch arrangement (1) has a reflector (7) for reflecting the transmitted radio signal, and the reflector (7) is operatively connected to the transceiver element (6) in such a way that the transmitted radio signal is reflected in the direction of the transceiver element (6).

3. Fill level switch arrangement (1) according to claim 1 or 2, **characterized in that** the transmitting element (4) transmits an non-directional radio signal.

4. Fill level switch arrangement (1) according to any one of claims 1 to 3, **characterized in that** the transmitting element (4) is configured in such a manner that the transmitted radio signal is coded with a first coding, and that the receiving element (5) has a decoding unit (8), such that the receiving element (5) assigns the radio signal coded with the first coding to the first transmitting element (4), wherein the switching signal is generated and transmitted only when the radio signal assigned to the first transmitting element (4) exhibits a change.

5. Fill level switch arrangement (1) according to claim 4, **characterized in that** the fill level switch arrangement (1) has at least a second transmitting element (4) for transmitting a second radio signal, wherein the second transmitting element (4) is configured such that the second radio signal is coded with a second coding, and wherein the decoding unit (8) is configured such that the receiving element (5) assigns the radio signal coded with the second coding to the second transmitting element (4), wherein a second switching signal is then generated and transmitted, when the radio signal associated with the second transmitting element (4) exhibits a change.

6. Fill level switch arrangement (1) according to claim 5, **characterized in that** the first transmitting element (4) is arranged at a first height h₁ in the container (3) and the second transmitting element (4) is arranged at a second height h₂ in the container (3), wherein the first height h₁ and the second height h₂ are different.

7. Fill level switch arrangement (1) according to any one of claims 1 to 6, **characterized in that** the fill level switch arrangement has at least a second receiving element (5).

8. Fill level switch arrangement (1) according to any one of claims 1 to 7, **characterized in that** the transmitting element (4) has a sensor (10, 11) for detecting a physical variable of the medium (2), wherein the transmitting element (4) is configured such that it converts the detected variable into a secondary radio signal and transmits it, and wherein the receiving element (5) transmits the secondary radio signal to an evaluation unit (12) which transmits a value for the detected physical variable.

9. Method for determining the fill level of a medium (2) in a container (3) with a fill level switch arrangement (1), wherein the fill level switch arrangement (1) comprises a transmitting element for transmitting a radio signal and a receiving element (5) for detecting the radio signal, wherein the transmitting element (4) is operatively connected to the receiving element (5) and wherein the transmitting element (4) has detection surface (9), wherein a radio signal is transmitted by the transmitting element (4) in a first step (101), the radio signal is received by the receiving element (5) in a second step (102), the received radio signal is compared with a predetermined comparison radio signal in a third step (103), and, in the case of a deviation of the received signal from the comparison radio signal determined by comparison, a switching signal is generated and transmitted by the receiving element (5) in a fourth step (104) and, wherein, in an additional step, a switch signal from the transmitting element (4) is generated and output when the detection surface (9) of the transmitting element (4) comes into contact with medium (2).

10. Method according to claim 9, wherein the receiving element (5) of the fill level switch arrangement (1) has a decoding unit (8), **characterized in that** the radio signal transmitted by the transmitting element (3) is coded with a first coding (101'), the coded radio signal is decoded by the decoding unit (8) and the radio signal is assigned (102') to the transmitting element (4).

11. Method according to claim 10, wherein the fill level switch arrangement (1) has a second transmitting element (4), **characterized in that** a radio signal is transmitted by the second transmitting element (4) in a fifth step (105), that the radio signal is received by the receiving element (5) in a sixth step (106), the received radio signal is compared with a predetermined comparison radio signal in a seventh step (107), and in the case of a deviation of the received radio signal from the comparison radio signal determined by comparison, a switching signal is generated and transmitted by the receiving element (5) in an eighth step (108).

12. Method according to any one of claims 9 to 11, **characterized in that** in a further step (109), a physical variable of the medium (2) is detected by a sensor (10, 11) in the transmitting element (4), that the detected variable is converted into a secondary signal, that the secondary signal is superimposed on the radio signal, that the secondary signal is transmitted from the receiving element (5) to an evaluation unit (12), and that the evaluation unit (12) outputs a value for the physical variable.

## Revendications

1. Ensemble formant commutateur à niveau de remplissage (1) destiné à déterminer le niveau de remplissage d'un milieu (2) dans un récipient (3) et comprenant un élément émetteur (4) et un élément récepteur (5), l'élément émetteur (4) servant à émettre un signal radio et étant relié fonctionnellement à l'élément récepteur (5), l'élément récepteur (5) servant à détecter le signal radio, l'élément récepteur (5) étant conçu de façon à générer et émettre un signal de commutation en cas de variation du signal radio reçu causée par le milieu (2), et l'élément émetteur (4) comportant une surface de détection (9) et l'élément émetteur (4) générant et émettant un signal de commutation lorsque la surface de détection (9) entre en contact avec le milieu (2).

2. Ensemble formant commutateur à niveau de remplissage (1) selon la revendication 1, **caractérisé en ce que** l'élément émetteur (4) et l'élément récepteur (5) sont conçus comme un élément émetteur-récepteur combiné (6) et **en ce que** l'ensemble formant commutateur à niveau de remplissage (1) comporte un réflecteur (7) destiné à réfléchir le signal radio émis et le réflecteur (7) étant relié fonctionnellement à l'élément émetteur-récepteur (6) de manière que le signal radio émis soit réfléchi en direction de l'élément émetteur-récepteur (6).

3. Ensemble formant commutateur à niveau de remplissage (1) selon la revendication 1 ou 2, **caractérisé en ce que** l'élément émetteur (4) émet un signal radio omnidirectionnel.

4. Ensemble formant commutateur à niveau de remplissage (1) selon l'une des revendications 1 à 3, **caractérisé en ce que** l'élément émetteur (4) est conçu de telle sorte que le signal radio émis soit codé avec un premier codage et **en ce que** l'élément récepteur (5) comporte une unité de décodage (8) de telle sorte que l'élément récepteur (5) associe le signal radio, codé avec le premier codage, au premier élément émetteur (4), dans lequel le signal de commutation n'est généré et émis que lorsque le signal radio associé au premier élément émetteur (4) présente une variation.

5. Ensemble formant commutateur à niveau de remplissage (1) selon la revendication 4, **caractérisé en ce que** l'ensemble formant commutateur à niveau de remplissage (1) comporte au moins un deuxième élément émetteur (4) destiné à émettre un deuxième signal radio, le deuxième élément émetteur (4) étant conçu de telle sorte que le deuxième signal radio soit codé avec un deuxième codage et l'unité de décodage (8) étant conçue de telle sorte que l'élément récepteur (5) associe le signal radio, codé avec le deuxième codage, au deuxième élément émetteur (4), un deuxième signal de commutation étant généré et émis lorsque le signal radio associé au deuxième élément émetteur (4) présente une variation.

6. Ensemble formant commutateur à niveau de remplissage (1) selon la revendication 5, **caractérisé en ce que** le premier élément émetteur (4) est disposé à une première hauteur h₁ dans le réservoir (3) et le deuxième élément émetteur (4) est disposé à une deuxième hauteur h₂ dans le réservoir (3), la première hauteur h₁ et la deuxième hauteur h₂ étant différentes.

7. Ensemble formant commutateur à niveau de remplissage (1) selon l'une des revendications 1 à 6, **caractérisé en ce que** l'ensemble formant commutateur à niveau de remplissage (1) comporte au moins un deuxième élément récepteur (5).

8. Ensemble formant commutateur à niveau de remplissage (1) selon l'une des revendications 1 à 7, **caractérisé en ce que** l'élément émetteur (4) comporte un capteur (10, 11) destiné à détecter une grandeur physique du milieu (2), l'élément émetteur (4) étant conçu de manière à convertir la grandeur détectée en un signal radio secondaire et à l'émettre, et l'élément récepteur (5) transmettant le signal radio secondaire à une unité d'évaluation (12) qui émet une valeur pour la grandeur physique détectée.

9. Procédé de détermination du niveau de remplissage d'un milieu (2) dans un réservoir (3) à l'aide d'un ensemble formant commutateur à niveau de remplissage (1), l'ensemble formant commutateur à niveau de remplissage (1) comportant un élément émetteur (4) destiné à émettre un signal radio et un élément récepteur (5) destiné à détecter le signal radio, l'élément émetteur (4) étant relié fonctionnellement à l'élément récepteur (5) et l'élément émetteur (4) comportant une surface de détection (9), dans une première étape (101) un signal radio étant émis par l'élément émetteur (4), dans une deuxième étape (102) le signal radio étant reçu par l'élément récepteur (5), dans une troisième étape (103) le signal radio reçu étant comparé à un signal radio de comparaison spécifié et dans une quatrième étape (104) un signal de commutation étant généré et émis par l'élément récepteur (5) si la comparaison détermine un écart entre le signal radio reçu et le signal radio de comparaison et dans une étape supplémentaire un signal de commutation étant généré et émis par l'élément émetteur (4) lorsque la surface de détection (9) de l'élément émetteur (4) entre en contact avec le milieu (2) .

10. Procédé selon la revendication 9, l'élément récepteur (5) de l'ensemble formant commutateur à niveau de remplissage (1) comportant une unité de décodage (8), **caractérisé en ce que** le signal radio émis par l'élément émetteur (3) est codé (101') avec un premier code, le signal radio codé étant décodé par l'unité de décodage (8) et le signal radio étant associé (102') à l'élément émetteur (4).

11. Procédé selon la revendication 10,
l'ensemble formant commutateur à niveau de remplissage (1) comportant un deuxième élément émetteur (4), **caractérisé en ce que** dans une cinquième étape (105) un signal radio est émis par le deuxième élément émetteur (4), **en ce que** dans une sixième étape (106) le signal radio est reçu par l'élément récepteur (5), dans une septième étape (107) le signal radio reçu est comparé à un signal radio de comparaison spécifié et dans une huitième étape (108) un signal de commutation est généré et émis par l'élément récepteur (5) si la comparaison détermine un écart entre le signal radio reçu et le signal radio de comparaison.

12. Procédé selon l'une des revendications 9 à 11, **caractérisé en ce que** dans une étape supplémentaire (109) une grandeur physique du milieu (2) est détectée par un capteur (10, 11) de l'élément émetteur (4), **en ce que** la grandeur détectée est convertie en un signal secondaire, **en ce que** le signal secondaire est superposé au signal radio, **en ce que** le signal secondaire est transmis par l'élément récepteur (5) à une unité d'évaluation (12) et **en ce que** l'unité d'évaluation (12) délivre une valeur pour les grandeurs physiques.
